# EUROPEAN PATENT SPECIFICATION

(11) **EP 2 026 686 B1**
(45) Date of publication and mention of the grant of the patent: **06.04.2011**
(21) Application number: 07747499.7
(22) Date of filing: 11.06.2007
(51) Int. Cl.: A47J 37/12

(54) **DEEP-FRYER WITH DRAWER FOR KEEPING DEEP-FRIED FOOD WARM**
FRITTEUSE MIT SCHUBLADE ZUM WARMHALTEN VON FRITTIERTEN NAHRUNGSMITTELN
FRITEUSE COMPRENANT UN TIROIR DESTINÉ À MAINTENIR LA CHALEUR DES ALIMENTS FRITS

(30) Priority: 11.06.2006 NL 1031979
(43) Date of publication of application: 25.02.2009
(73) Proprietor: Princess Household Appliances B.V., 4818 PA Breda (NL)
(72) Inventor: VAN LOON, Gerardus, Adrianus, 4661 HX Halsteren (NL)
(74) Representative: Eveleens Maarse, Pieter
(86) International application number: PCT/NL2007/050276
(87) International publication number: WO 2007/145515

(56) References cited:
- EP-A- 0 277 920
- EP-A1- 1 388 314
- EP-A1- 1 428 463
- US-A- 4 499 818
- US-A- 5 682 809
- US-B1- 6 261 621

## Description

The invention relates to a device for deep-frying food products, comprising a housing for placing on a worktop, a liquid-tight pan carried by this housing and thermally insulated there from to at least some extend, heating means located in this pan for heating to a chosen operating temperature deep frying medium placed in the pan, in particular fat or oil, a separate basket fitting with clearance into the pan and having a carrying handle thermally insulated from the basket.

After the food products which have just been deep fried are removed from the frying medium by lifting the basket therefrom, excess hot frying medium leaks out. The basket is often provided, in combination with the rest of the device, with positioning means which have the purpose of holding the basket some distance above the surface of the hot frying medium. A certain degree of leakage of medium is hereby realized.

The user can then distribute the content of the basket in portions over the waiting plates. It is often found that a larger quantity of deep-fried food products cannot be distributed over the plates in one serving, so that deep-fried food remains behind in the basket. This food cools quickly, even when kept in the basket above the hot frying medium, and the temperature of the food hereby decreases rapidly and the crispness diminishes. Holding the food thus, for instance for about five to ten minutes, generally results in a substantial loss of quality.

To overcome these problems EP-A-1 428 463 discloses such an apparatus for deep-frying food products, comprising a housing for placing on a worktop, a liquid-tight pan carried by this housing and thermally insulated therefrom to at least some extend, heating means located in this pan for heating to a chosen operating temperature deep frying medium placed in the pan, in particular fat or oil, a separate basket fitting with clearance into the pan and having a carrying handle thermally insulated from the basket, a free space situated under the bottom of the pan within the housing and a separate drawer, which can slide in and out of said space and which is intended for temporarily storing deep fried food in the heated space, wherein the free space is adapted to be heated by the pan during operation and that the housing has at least one perforation through which hot and moist air from the food present in the drawer can escape to the outside and a separate drawer which can slide in and out of said space and which is intended for temporarily storing deep fried food in the heated space.

In this prior art deep fry device the free space is connected to the surroundings through a single aperture, so that hot and moist air can only escape to the outside to a limited extend so that the food products which have just been deep fried remain crispy only for a short period of time.

The aim of the invention is to avoid this disadvantage.

This aim is reached in that a row of perforations connects on each of the two sides to the upper side of the free space to the upper side of the free space.

Because the hot and moist air can escape better to the outside, the food products which have just been deep fried remain crispy for a considerably longer period of time than in the case where the hot and moist air remains trapped in the space for keeping food warm.

Such an embodiment is highly suitable, after adequate heating of the bottom, for placing the store of food on the dining table, for instance on an insulating mat. This is a particularly practical function, whereby the host or hostess need only get up from the table a limited number of times to transport the basket with deep-fried food from the preparation location to the dining table.

In order to keep as crispy as possible the deep fried food present in the basket and to be temporarily stored and then distributed, the device can advantageously have the special feature that the drawer comprises an optionally releasable plate which is permeable to dripping, hot frying medium and which at least during operation is carried some distance above the bottom of the drawer by carrying means. In this manner the excess frying medium in the drawer drains off and can be reused later or be disposed of.

The permeable plate can be a plate with a number of perforations, but may for instance also be embodied as a gauze mesh or grid.

A simple embodiment has the special feature that the plate is provided with at least three legs. In the case of the usual rectangular shape of the device of the present type, it will be recommended to also give the drawer a rectangular shape. The permeable plate will have a modified shape since it must after all cover substantially the whole bottom of the plate. Such a rectangular plate will be provided with a leg on each of its four corner points. Such a leg can for instance have a height of 5-10 mm.

In a preferred embodiment the carrier plate is releasable and can thus be cleaned separately.

The invention will now be elucidated with reference to the accompanying drawings of a random exemplary embodiment, to which the invention is not limited. In the drawings:
Figure 1 shows a perspective view of a device according to the invention with a drawer for keeping food warm pulled out;
Figure 2 shows the device according to figure 1 in which the drawer is pushed in;
Figure 3 shows a perspective cross-sectional view of the device according to the invention; and
Figure 4 shows a perspective view of the drawer, wherein a drip grid is drawn some distance there above.

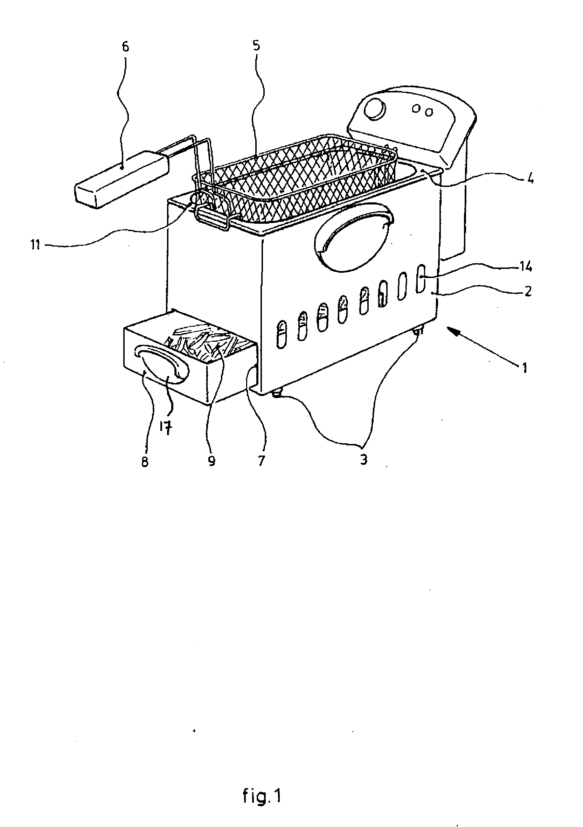

Figure 1 shows a deep-fryer 1 according to the invention. This device for deep-frying food products comprises a housing 2 with support feet 3 to be placed on a worktop, a liquid-tight pan 4, for instance of stainless steel, carried by this housing and thermally insulated to a greater or lesser extent therefrom, electric heating means (not drawn) coacting with this pan and having an adjustable thermostatic control for heating frying medium placed in the pan, such as fat or oil, to the selected operating temperature set by the user, and a separate basket 5 of metal gauze which fits with clearance into pan 4 and which is provided with a plastic carrying handle 6.

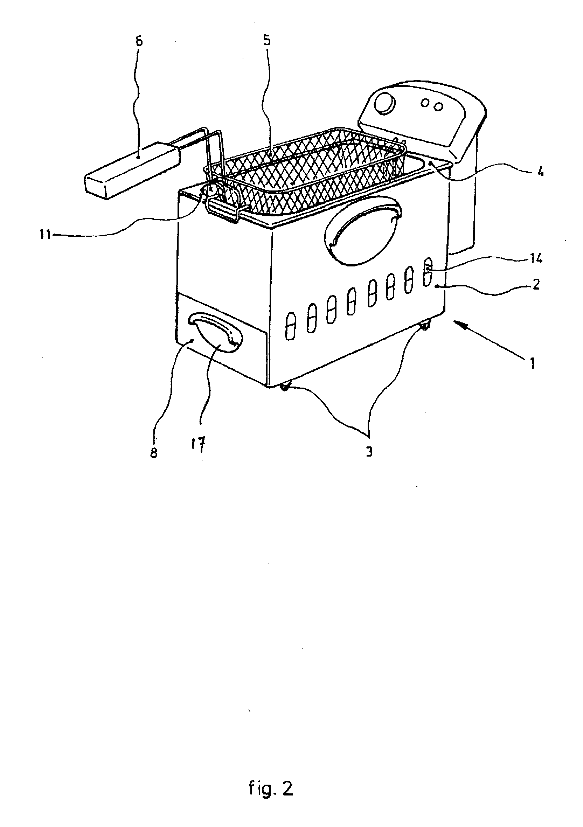

Housing 2 has on its underside a free space 7 which is situated under the bottom of pan 4 and is heated thereby during operation. A separate drawer 8 can be pushed into the free space and removed slidably therefrom, which drawer is intended for temporary storage of deep-fried food 9 in the heated free space 7. Figure 1 shows drawer 8 in half pulled-out position and figure 2 shows drawer 8 in pushed-in position.

The basket is shown in raised position in both figure 1 and figure 2. It is supported in this position by upper edge 11 of pan 4.

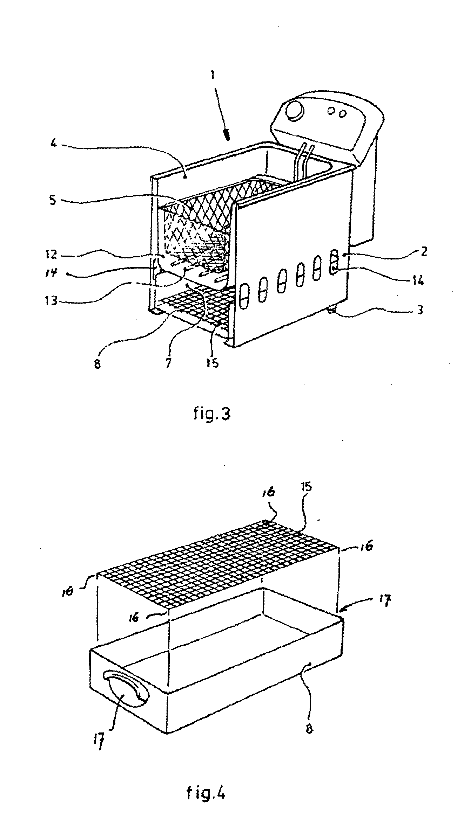

Figure 3 shows assembled device 1. Situated in pan 4 is a hot deep-frying medium 12 which is heated in per se known manner to the frying temperature, for instance 170-200°C, by a heating element 13. This is however all generally known prior art and does not therefore need to be discussed in detail within the context of the invention.

Of great importance for the invention is the presence of two rows of elongate perforations 14 expending vertically in their longitudinal direction in both side walls of housing 2. Figure 3 clearly shows that the perforations connect to free space 7, this at a height between the upper edge of drawer 8 and the area of the underside of pan 4. In this manner the best possible ventilation of space 7 is ensured. The warm, moist air coming from the food 9 which has just been deep-fried and is still hot can escape through the two rows of eight perforations 14. The food is held at a raised consumption temperature by the heat coming from the bottom of pan 4, and the crispness is ensured by the described ventilation. A drip grid 15 above the bottom of warming drawer 8 further ensures that dripping frying medium comes to lie on the bottom of drawer 8 and cannot have the undesired effect of adhering to the deep-fried food and thus reducing the crispness in a short period of time.

Finally, figure 4 shows drawer 8 and drip grid 15 with four support legs 16 drawn some distance thereabove for the sake of clarity.

It is noted that the drawer is provided with a handle 17. Because the drawer can also be used to place the deep-fried food products on the table, it is recommended that a second handle is also present on the rear side of drawer 8, which is not visible in figure 4 and as indicated with an arrow 17.

## Claims

1. Device (1) for deep-frying food products, comprising:
- a housing (2) for placing on a worktop;
- a liquid-tight pan (4) carried by this housing (2) and thermally insulated therefrom to at least some extent;
- heating means (13) located in this pan (4) for heating to a chosen operating temperature deep frying medium (12) placed in the pan (4), in particular fat or oil;
- a separate basket (5) fitting with clearance into the pan (4) and having a carrying handle (6) thermally insulated from the basket (5);
- a free space (7) situated under the bottom of the pan (4) within the housing (2); and
- a separate drawer (8), which can slide in and out of said space (7) and which is intended for temporarily storing deep fried food (9) in the heated space (7), wherein the free space (7) is adapted to be heated by the pan (4) during operation and that the housing (2) has at least one perforation (14) through which hot and moist air from the food (9) present in the drawer (8) can escape to the outside, **characterized in that** a row of perforations (14) connects on each of the two sides to the upper side of the free space (7).

2. Device as claimed in claim 1, **characterized in that** the housing has a rectangular horizontal cross section and that both rows of perforations are located in the opposite longer walls of the housing.

3. Device as claimed in claim 1 or 2, wherein the drawer (8) comprises an optionally releasable plate (15) which is permeable to dripping, hot frying medium and which at least during operation is carried some distance above the bottom of the drawer (8) by carrying means (16).

4. Device as claimed in claim 3, wherein the plate (15) is provided with at least three legs (16).

## Patentansprüche

1. Vorrichtung (1) zum Frittieren von Nahrungsmitteln, die umfasst:
- ein Gehäuse (2) zur Unterbringung auf einer Arbeitsfläche;
- einen flüssigkeitsdichten Innenbehälter (4), der von diesem Gehäuse (2) getragen wird und von diesem zumindest in gewissem Ausmaß thermisch isoliert ist;
- Heizmittel (13), die in diesem Innenbehälter (4) untergebracht sind, zum Erhitzen von in dem Innenbehälter (4) befindlichem Frittiermedium (12), insbesondere Fett oder Öl auf eine gewählte Betriebstemperatur;
- einen separaten Korb (5), der mit Spiel in den Innenbehälter (4) passt und einen Tragegriff (6) hat, der von dem Korb (5) thermisch isoliert ist;
- einen freien Raum (7), der sich unter dem Boden des Innenbehälters (4) innerhalb des Gehäuses (2) befindet; sowie
- eine separate Schublade (8), die in den Raum (7) ein- und ausgeschoben werden kann, und welche für die vorübergehende Aufbewahrung der frittierten Nahrungsmittel (9) in dem beheizten Raum (7) dient, worin der freie Raum (7) ausgelegt ist, von dem Innenbehälter (4) während des Betriebs erwärmt zu werden, und dass das Gehäuse (20) mindestens ein Loch (14) besitzt, durch das heiße und feuchte Luft des in der Schublade (8) anwesenden Nahrungsmittels (9) zur Außenseite entweichen kann, **dadurch gekennzeichnet, dass** auf jeder Seite an der Oberseite des freien Raumes (7) eine Reihe Löcher (14) vorhanden ist.

2. Vorrichtung nach Anspruch 1, **dadurch gekennzeichnet, dass** das Gehäuse einen rechteckigen waagerechten Querschnitt besitzt und dass sich beide Lochreihen in den gegenüberliegenden Längswänden des Gehäuses befinden.

3. Vorrichtung nach Anspruch 1 oder 2, worin die Schublade (8) ein wahlweise lösbares Auffangblech (15) umfasst, das für tropfendes heißes Frittiermedium durchlässig ist und die zumindest während des Betriebs mit Hilfe von Tragemitteln (16) in einigem Abstand vom Schubladenboden (8) gehalten wird.

4. Vorrichtung nach Anspruch 3, worin das Auffangblech (15) mit mindestens drei Beinen (16) versehen ist.

## Revendications

1. Dispositif (1) pour frire des produits alimentaires, comprenant :
- un boîtier (2) à placer sur un plan de travail ;
- une cuve étanche aux liquides (4) portée par ce boîtier (2) et thermiquement isolée de lui au moins dans une certaine mesure ;
- un moyen de chauffage (13) situé dans cette cuve (4) pour chauffer jusqu'à une température de service choisie un milieu de friture (12) placé dans la cuve (4), en particulier de la graisse ou de l'huile ;
- un panier (5) distinct s'emboîtant avec un jeu dans la cuve (4) et comportant une poignée de transport (6) thermiquement isolée du panier (5) ;
- un espace libre (7) situé sous le fond de la cuve (4) à l'intérieur du boîtier (2), et
- un tiroir (8) distinct qui peut coulisser dans ledit, et hors dudit, espace (7) et qui est destiné à l'entreposage temporaire d'aliments frits (9) dans l'espace chauffé (7), étant entendu que l'espace libre (7) est adapté pour être chauffé par la cuve (4) en fonctionnement et que le boîtier (2) comporte au moins une perforation (14) par laquelle l'air chaud et humide issu des aliments (9) présents dans le tiroir (8) peut s'échapper à l'extérieur,
**caractérisé en ce qu'**une rangée de perforations (14) est raccordée de chacun des deux côtés au côté supérieur de l'espace libre (7).

2. Dispositif selon la revendication 1, **caractérisé en ce que** le boîtier a une section transversale horizontale rectangulaire et **en ce que** les deux rangées de perforations sont situées dans les longues parois opposées du boîtier.

3. Dispositif selon la revendication 1 ou 2, dans lequel le tiroir (8) comprend une plaque facultativement amovible (15) qui est perméable au milieu de friture chaud s'égouttant et qui, au moins en fonctionnement, est portée à une certaine distance au-dessus du fond du tiroir (8) par des moyens de transport (16).

4. Dispositif selon la revendication 3, dans lequel la plaque (15) est pourvue d'au moins trois pieds (16).
